# EUROPÄISCHE PATENTSCHRIFT

(11) **EP 2 318 178 B1**
(45) Veröffentlichungstag und Bekanntmachung des Hinweises auf die Patenterteilung: **16.04.2014**
(21) Anmeldenummer: 09777013.5
(22) Anmeldetag: 07.07.2009
(51) Int. Cl.: B23Q 1/48, B23Q 3/155, B23Q 5/34

(54) **WERKZEUGWECHSLER FÜR WERKZEUGMASCHINEN**
TOOL CHANGER FOR MACHINE TOOLS
CHANGEUR D'OUTIL POUR MACHINES-OUTILS

(30) Priorität: 07.07.2008 DE 202008009035 U
(43) Veröffentlichungstag der Anmeldung: 11.05.2011
(73) Patentinhaber: DECKEL MAHO Pfronten GmbH, 87459 Pfronten (DE)
(72) Erfinder: MAYR, Matthias, 87629 Füssen (DE); KRAFT, Oliver, 87459 Pfronten (DE)
(74) Vertreter: Beetz & Partner
(86) Internationale Anmeldenummer: PCT/EP2009/004912
(87) Internationale Veröffentlichungsnummer: WO 2010/003642

(56) Entgegenhaltungen:
- GB-A- 2 198 375
- JP-A- 11 099 429
- US-A- 5 749 819
- US-A- 5 947 878
- US-A1- 2006 135 333
- US-B1- 6 422 099

## Beschreibung

Die Erfindung betrifft einen Werkzeugwechsler für Werkzeugmaschinen, insbesondere für Fräsmaschinen, mit einem am freien Ende einer axial verschiebbar und drehbar gelagerten Welle montierten Werkzeug-Doppelgreifer, der zwei diametral gegenüberliegende zangenförmige Werkzeughalter aufweist, mit einem mit der Welle kinematisch gekoppelten Antriebsmotor für die Linear- und die Drehbewegungen des Werkzeug-Doppelgreifers und mit Getriebemitteln zum Umsetzen der Rotation der Motorwelle des Antriebsmotors in die Linear- und die Drehbewegung des Werkzeug-Doppelgreifers.

Es sind bereits Werkzeugwechselvorrichtungen für Werkzeugmaschinen bekannt, die eine Kurvenscheibe oder auch eine Kurventrommel aufweisen. In der Kurvenscheibe befindet sich eine seitliche Spurkurve, mit welcher der Hub der Werkzeugwechselvorrichtung, d.h. die Vorschubbewegung ihres Werkzeug-Doppelgreifers, realisiert wird. Ferner enthält die Kurvenscheibe bzw. die Kurventrommel an ihrer Mantelfläche eine Globoidkurve, in die ein Kugel- oder Rollenstern eingreift, der auf einer Keilwelle in deren Achsrichtung verschiebbar gelagert ist und die Drehbewegung des Werkzeug-Doppelgreifers bewirkt. Zwischen dem Antriebsmotor und der Kurvenscheibe bzw. der Kurventrommel ist häufig ein Planetengetriebe zwischengeschaltet. Durch eine geeignete Anordnung der vorstehend genannten Bauteile und der Spurkurven zueinander wird eine gewünschte Hub-Schwenk-Hub-Bewegung des Werkzeug-Doppelgreifers erzeugt. Derartige Werkzeugwechselvorrichtungen sind jedoch in der Herstellung aufwendig und teuer, bedingt durch den Servoantrieb mit Planetengetriebe-Untersetzung, die Globoidkurve mit dem Rollenstern und schließlich durch das Keilwellenprofil zur Überlagerung von Hub- und Schwenkbewegungen.

US-6,422,099 offenbart einen Werkzeugwechsler nach dem Oberbegriff des Anspruchs 1.

Aufgabe der Erfindung ist es, einen Werkzeugwechsler für Werkzeugmaschinen, insbesondere für Fräsmaschinen, Bearbeitungszentren od. dgl., zu schaffen, der die Nachteile des vorgenannten Standes der Technik überwindet, der aus konstruktiv einfachen Einzelteilen besteht und bei hoher Betriebszuverlässigkeit kostengünstig hergestellt werden kann.

Diese Aufgabe wird erfindungsgemäß durch den Werkzeugwechsler nach Anspruch 1 gelöst.

Gemäß einer vorteilhaften Ausgestaltung der Erfindung weist die Kurvenscheibe an ihrer einen Stirnseite die Hubkurve und an ihrer anderen Stirnseite die Rotationskurve auf. Auf diese Weise wird eine platzsparende Konstruktion geschaffen, da der Zahnstangentrieb an der einen Außenseite der Kurvenscheibe und das Schwenkgestänge an der anderen Außenseite der Kurvenscheibe angeordnet werden können. Insgesamt ergibt sich so ein kompakter Werkzeugwechsler, der nur einen geringen Platz seitlich zwischen der Werkzeugmaschine und dem zugehörigen Werkzeugmagazin beansprucht.

Gemäß einer weiteren vorteilhaften Ausgestaltung der Erfindung bildet das Schneckenrad des Schneckengetriebes die Drehscheibe und weist zu diesem Zweck auf ihrem Außenumfang die entsprechende Verzahnung auf. Unter Kostengesichtspunkten wird gemäß einer weiteren zweckmäßigen Ausgestaltung der Erfindung als Antriebsmotor ein Servo-Direktantrieb oder ein polumschaltbarer Drehstrommotor eingesetzt.

Bei dem erfindungsgemäß ausgebildeten Werkzeugwechsler ergeben sich die Vorteile geringer Außenabmessungen und niedriger Herstellungskosten durch konstruktiv einfache Baugruppen, indem beispielsweise die Welle einen in ihrer Längsrichtung sich erstreckenden verzahnten Abschnitt aufweist, an dem der gezahnte Teil der Zahnstange eingreift. Damit erfolgt eine direkte Übertragung der Längsbewegung der Zahnstange in eine Drehbewegung der in einem langgestreckten rohrartigen Gehäuse zweifach gelagerten Welle.

Zur Erzielung der axialen Vorschubbewegung der Welle bzw. der Hubbewegung des Werkzeug-Doppelgreifers mit technisch einfachen Mitteln weist das Schwenkgestänge zweckmäßig einen Schwinghebel auf, an dem ein mit der Welle gekoppelter Treiber sowie von diesem beabstandet der in die Hubkurve der Drehscheibe eingreifende Mitnehmer angeorndet sind. Entsprechend dem Verlauf der Hubkurve führt der Schwinghebel Schwenkbewegungen um sein Lager aus, die in translatorische Vorschubbewegungen der Welle umgesetzt werden. Zweckmäßig sind an einem Ende des Schwinghebels der Treiber und an seinem anderen Ende der Mitnehmer befestigt.

Im Folgenden werden Ausführungsbeispiele des erfindungsgemäßen Werkzeugwechslers für eine Fräsmaschine anhand der Zeichnung im Einzelnen beschrieben. Es zeigen:
- Fig. 1: eine Fräsmaschine mit Kettenmagazin und erfindungsgemäßem Werkzeugwechsler in schematischer perspektivischer Darstellung;
- Fig. 2, 3: den in der Maschine nach Fig. 1 eingesetzten Werkzeugwechsler in zwei verschiedenen Betriebsstellungen in teilgeschnittener Seitenansicht;
- Fig. 4, 5: den Werkzeugwechsler nach Fig. 2, 3 in jeweils gleichem Betriebszustand in teilgeschnittener Perspektivdarstellung von der anderen Seite;
- Fig. 6, 7: eine andere Ausführung des erfindungsgemäßen Werkzeugwechslers in zwei perspektivischen Seitenansichten.

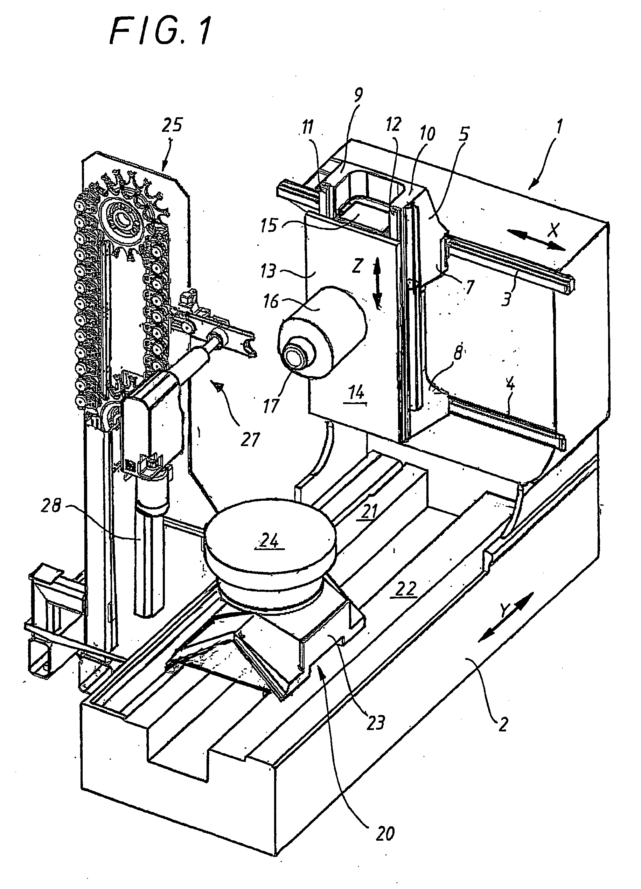

Bei der in Fig. 1 dargestellten Werkzeugmaschine handelt es sich um eine programmgesteuerte Fräsmaschine von hochsteifer Konstruktion, die einen am rückwärtigen Ende eines langgestreckten Bettes 2 angeordneten Ständer 1 aufweist, an dessen Vorderseite zwei zueinander parallele Führungsschienen 3, 4 montiert sind. An diesen Führungsschienen läuft ein Horizontalschlitten 5 in der X-Koordinatenachse. Als Antriebsaggregate für die horizontalen Verfahrbewegungen des Schlittens 5 können z.B. Spindeltriebe mit Kugelumlauf, elektrische Linearmotoren oder andere geeignete Antriebsaggregate eingesetzt werden. Der Horizontalschlitten 5 hat zwei rückwärtige Führungsansätze 7, 8, in denen auf den Führungsschienen 3, 4 laufende Führungsschuhe eingebaut sind. Wie gezeigt, hat der Horizontalschlitten 5 eine nach vorne offene U-Form, die ihm bei geringem Gewicht eine hohe Eigensteifigkeit verleiht, was sich in einer hohen Dynamik und Bearbeitungsgenauigkeit der gesamten Maschine auswirkt. An den beiden vorderen parallelen Schenkeln 9, 10 des U-förmigen Horizontalschlittens 5 sind zwei parallele vertikale Führungsschienen 11, 12 angeordnet, an denen ein Vertikalschlitten 13 in der vertikalen Z-Koordinatenachse verschiebbar geführt ist. Wie ersichtlich, weist der Vertikalschlitten 13 ein vorderes Plattenelement 14 auf, an dessen Rückseite ein Stütz- und Führungselement 15 befestigt ist, das zwischen die beiden Schenkel 9, 10 des Horizontalschlittens 5 eingreift und ggf. dort gesondert geführt ist. An der Vorderseite des Vertikalschlittens 13 ist ein Spindelkopf 16 mit einer Werkzeugaufnahme angeordnet.

Auf der Oberseite des Bettes 2 ist eine Werkstücktischanordnung 20 in Richtun der X-Koordinatenachse auf parallelen Führungsschienen 21, 22 verschiebbar geführt. Diese Werkstücktischanordnung 20 enthält einen auf den Schienen 21, 22 abgestützten und mittels z.B. eines oder mehrerer Linearmotoren in X-Richtung verfahrbaren Unterbau 23 sowie einen darauf angeordneten Drehtisch 24.

Seitlich neben der Werkzeugmaschine ist ein Werkzeug-Kettenmagazin 25 an einer Tragkonstruktion angeordnet und in dem Raum seitlich zwischen der Werkzeugmaschine und dem Werkzeugmagazin ist ein erfindungsgemäß ausgebildeter Werkzeugwechsler 27 an einer Tragkonstruktion 28 angeordnet, der im Folgenden ausführlicher beschrieben wird.

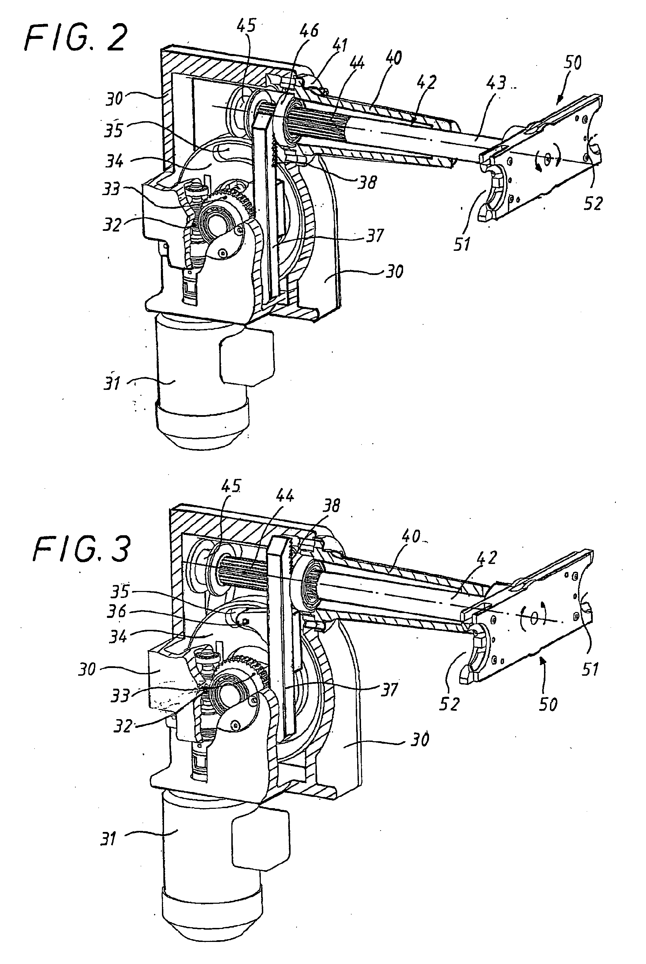

Der in Fig. 2 bis 5 dargestellte Werkzeugwechsler 27 enthält ein Gehäuse 30, an dessen Bodenwand ein Motor 31 in vertikaler Ausrichtung montiert ist. Der Motor 31 treibt ein Schneckenradgetriebe 32, 33, und zu diesem Zweck ist die Motorwelle mit der Schnecke 32 gekoppelt, die mit der Verzahnung des um eine horizontale Welle gelagerten Schneckenrads 33 in Eingriff steht. Das Schneckenrad 33 treibt eine Drehscheibe 34, in deren einer Seite eine nutförmige Rotationskurve 35 ausgebildet ist. In dieser Rotationskurve 35 ist ein Mitnehmer 36 geführt, der an einer Zahnstange 37 von hier Vierkant-Querschnitt montiert ist. Diese Zahnstange 37 hat in ihrem oberen Endabschnitt eine Verzahnung 38 und ist im Gehäuse 30 vertikal verschiebbar geführt. Eine Rotation der Drehscheibe 34 führt über den Eingriff des Mitnehmers 36 in die nutförmige Rotationskurve 35 zu einer Vertikalbewegung der Zahnstange 37 und über deren Eingriff in den längsgezahnten Wellenabschnitt 44 zu einer Verdrehung der Welle 42 und des Doppelgreifers 50.

Im oberen Teil des Gehäuses 30 ist seitlich ein Tragrohr 40 mittels eines endseitigen Flansches 41 um seine Längsachse verdrehbar gelagert, das eine zum freien Ende hin sich allmählich verjüngende, d.h. schwach konische, Form hat. Das Tragrohr 40 kann auch zylindrisch sein. In diesem Tragrohr 40 ist eine Welle 42 axial verschiebbar aufgenommen, die einen zylindrischen Abschnitt 43, einen längsgezahnten Abschnitt 44 sowie eine endseitige Begrenzungsbuchse 45 aufweist. Der längsgezahnte Wellenabschnitt 44 ist in einem Lagerring 46 geführt. Am freien Ende der Welle 42 ist ein Werkzeug-Doppelgreifer 50 montiert, der zwei zangenartig ausgebildete halbrunde Aufnahmen 51, 52 für je ein Werkzeug trägt. In Fig. 3 ist der Werkzeug-Doppelgreifer 50 gegenüber der Stellung in Fig. 2 um 180° verdreht.

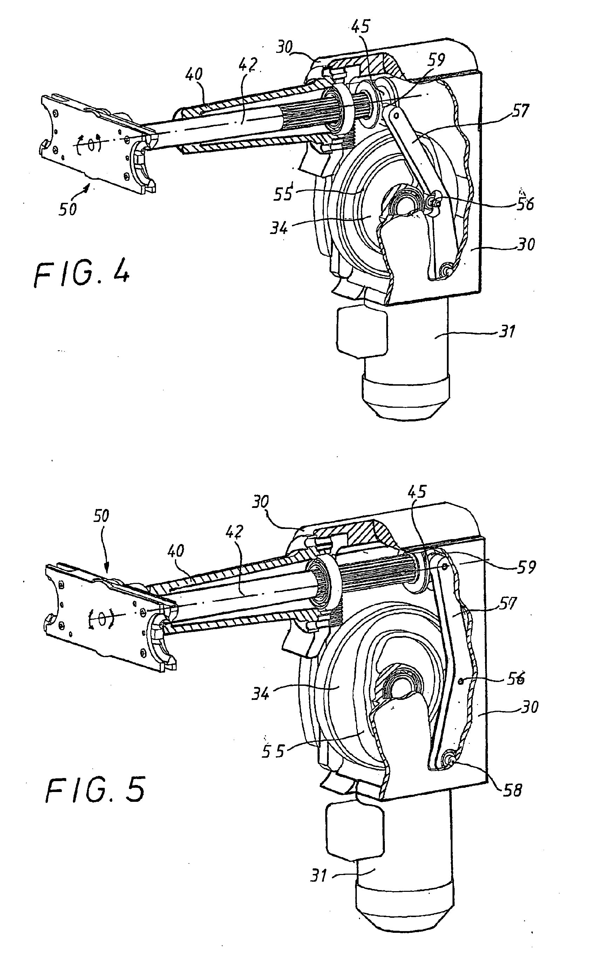

Die Figuren 4 und 5 zeigen die zweite Seitenansicht des Werkzeugwechslers nach Fig. 2, 3 ebenfalls in perspektivischer teilgeschnittener Darstellung. Wie ersichtlich, weist die Drehscheibe 34 an der zweiten Stirnfläche eine ebenfalls wie die Rotationskurve 35 an der anderen Stirnseite als Nut ausgebildete Hubkurve 55 auf, in die ein Mitnehmer 56 eingreift. Dieser Mitnehmer 56 ist als Zapfen oder Rolle an einem eine Schwinge bildenden Schwenkhebel 57 seitlich befestigt, der winkelförmig ausgebildet ist und mit seinem unteren Endteil in einem Lager 58 am Gehäuse 30 schwenkbar gelagert ist. Am oberen Ende des Schwenkhebels 57 ist ein Mitnehmer 59 in Form z.B. einer drehbar gelagerten Rolle angeordnet, der zwischen die beiden Radialflansche des eine Muffe bildenden Endbegrenzers 45 eingreift. In Fig. 4 ist der Schwenkhebel 57 in seiner vorgeschwenkten Stellung gezeigt, in welcher durch den Eingriff seines Mitnehmers 59 die Welle 42 in ihre ausgeschobene Stellung bewegt worden ist. In der Stellung nach Fig. 5 ist der Schwenkhebel 57 nach rechts verschwenkt und damit die Welle 42 sowie der Werkzeug-Doppelgreifer in seine nach rechts eingezogene Stellung bewegt.

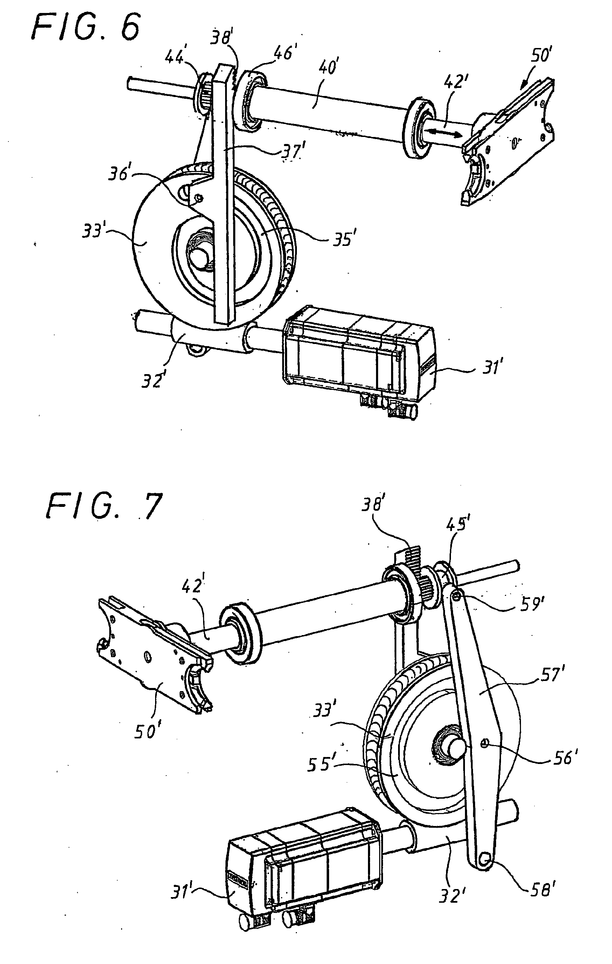

Das Ausführungsbeispiel nach den Figuren 6 und 7 entspricht in seinem technischen Konzept der vorstehend anhand der Figuren 2 bis 5 beschriebenen Ausführung. Aus diesem Grunde sind funktionsgleiche Bauteile bei dem Ausführungsbeispiel nach Fig. 6 und 7 auch mit den gleichen Bezugszeichen (mit Strich) versehen.

Der elektrische Antriebsmotor 31' ist hier horizontal ausgerichtet und treibt über seine Ausgangswelle eine Schnecke 32', die - im Unterschied zu der vertikalen Ausrichtung bei dem ersten Ausführungsbeispiel nach Fig. 2 bis 5 - hier horizontal ausgerichtet ist. Die Schnecke 32' bildet mit dem Schneckenrad 33' ein Schneckengetriebe, wobei dieses Schneckenrad 33' mit der Drehscheibe in dem Ausführungsbeispiel der Figuren 2 bis 5 einteilig ausgebildet ist und an ihrem Außenumfang die Verzahnung trägt, mit der sie mit der Zahnung der Schnecke 32' in Eingriff steht.

Wie aus der einen Seitenansicht der Fig. 6 erkennbar, ist an der einen Stirnseite des Schneckenrads 33' eine Rotationskurve 35' eingearbeitet, in die ein z.B. eine kleine Rolle aufweisender Mitnehmer 36' eingreift. Dieser Mitnehmer 36' ist an einem Schwenkhebel 37' angeordnet, der einen gezahnten Endteil 38' aufweist und damit eine in dem - nicht dargestellten - Gehäuse auf und ab bewegbare Zahnstange bildet. Der gezahnte Abschnitt 38' greift in einen längsgezahnten Abschnitt 44' einer Welle 42' ein, die in einem zylindrischen Tragrohr 40' axial verschiebbar gelagert ist, wie dies auch bei der Ausführung nach Fig. 2 bis 5 der Fall ist. Am freien Ende der Welle 42' ist ein Werkzeug-Doppelgreifer 50' in der gleichen Ausführung wie beim Ausführungsbeispiel nach Fig. 2 bis 5 montiert.

Fig. 7 zeigt die Ausführung des Werkzeugwechslers in schematischer perspektivischer Darstellung von der anderen Seite. An der der Rotationskurve 35' gemäß Fig. 6 gegenüberliegenden Stirnseite weist das Schneckenrad 33' eine Hubkurve 55' in Form einer eingeformten Nut auf, in die ein Mitnehmer 56' eingreift, der im mittleren verbreiterten Teil eines Schwenk- bzw. Schwinghebels 57' befestigt ist. An seinem unteren Ende ist der Schwenk- bzw. Schwinghebel 57 in einem Lager 58' im - nicht dargestellten Gehäuse - verschwenkbar gelagert. An seinem oberen Ende trägt der Schwenk- bzw. Schwinghebel einen Mitnehmer 59', der in den radialen Zwischenraum des Buchsenelements 45' eingreift.

Die Funktionsweise der vorstehend genannten Ausführungsbeispiele ist weitgehend die gleiche. Durch Aktivieren des Elektromotors wird die Schnecke des Schneckengetriebes angetrieben, die mit der Drehscheibe mechanisch gekoppelt oder einteilig ausgebildet ist. Bei einer Rotation der Schnecke wird die Drehscheibe verdreht, wodurch die einmal in der Hubkurve und zum anderen in der Rotationskurve eingreifenden Mitnehmer entsprechend dem jeweiligen Kurvenverlauf bewegt werden. Der der Zahnstange 37, 37' zugehörige Mitnehmer 36, 36' bewirkt eine Auf- bzw. Abbewegung der Zahnstange und damit eine Verdrehung der Welle 42, 42' sowie des Werkzeug-Doppelgreifers 50, 50' um die Längsachse um 180°. Gleichzeitig bzw. in einer vorgewählten zeitlichen Versetzung erfolgt durch den Eingriff des Mitnehmers 56, 56' in die Hubkurve 55, 55' eine Verschwenkung des Schwenk- bzw. Schwinghebels 57, 57', dessen Mitnehmer 59, 59' eine Axialverschiebung der Welle 42, 42' und damit auch des Werkzeug-Doppelgreifers bewirkt.

Die Erfindung ist nicht auf die dargestellten Ausführungsbeispiele beschränkt. So kann statt des Elektromotors 31 auch ein anderes Antriebsaggregat, beispielsweise ein Servomotor, verwendet werden. Ferner können beispielsweise für die Hubbewegung der Welle und damit des Werkzeug-Doppelgreifers auch konstruktiv anders als der Schwenk- bzw. Schwinghebel 57 ausgebildete Gestänge eingesetzt werden.

## Patentansprüche

1. Werkzeugwechsler für Werkzeugmaschinen, insbesondere für Fräsmaschinen, mit
- einem am freien Ende einer in einem Gehäuse (30, 30') axial verschiebbar und verdrehbar gelagerten Welle (42 , 42') montierten Werkzeug-Doppelgreifer (50, 50'), der zwei zangenförmige Werkzeughalter (51, 52) aufweist,
- einem mit der Welle (42, 42') kinematisch gekoppelten Antriebsmotor (31, 31') für die Linear- und Drehbewegungen des Werkzeug-Doppelgreifers (50, 50') und
- Getriebemitteln zum Umsetzen der Rotation der Motorwelle des Antriebsmotors (31, 31') in die Linear- und Drehbewegungen des Werkzeug-Doppelgreifers (50, 50'), wobei
- die Getriebemittel ein vom Antriebsmotor (31 , 31') angetriebenes Getriebe (32, 33; 32', 33') enthalten,
- das Getriebe eine Kurvenscheibe (33', 34) antreibt, an der stirnseitig eine Hubkurve (55, 55') für die Linearbewegung und eine Rotationskurve (35, 35') für die Drehbewegung ausgebildet sind,
- in der Rotationskurve (35, 35') ein Mitnehmer (36, 36') eines mit der Welle (42, 42') rotatorisch gekoppelten Zahnstangentriebs (37, 38; 37', 38') eingreift, dessen Zahnstange (37, 37') mit einem längsgezahnten Abschnitt (44, 44') der Welle (42, 42') zusammenwirkt, und
- in der Hubkurve (55, 55') ein Mitnehmer (56, 56') eines mit der Welle (42) translatorisch gekoppelten Schwenkgestänges (57, 57') eingreift und geführt ist,
**dadurch gekennzeichnet, dass**
- das Getriebe ein Schneckengetriebe (32, 33; 32', 33') ist, dessen Schneckenrad (33, 33') die Kurvenscheibe (33', 34) antreibt, und
- ein die Welle (42, 42') zumindest teilweise umgebendes Tragrohr (40, 40') endseitig im Gehäuse (30, 30') gelagert ist.

2. Werkzeugwechsler nach Anspruch 1,
**dadurch gekennzeichnet, dass**
das Schneckenrad (33') des Schneckengetriebes die Welle (42') des Werkzeug-Doppelgreifers (50') über einen Zahnstangentrieb (37', 38', 44') in Drehung versetzt und sie über einen Hubkurventrieb mit einem Schwenkgestänge (57, 57') axial verschiebt.

3. Werkzeugwechsler nach Anspruch 1 oder 2,
**dadurch gekennzeichnet, dass**
eine dem Schneckenrad (33) des Schneckengetriebes zugeordnete Drehscheibe (34) in ihrer einen Stirnseite eine Hubkurve (55) und in ihrer anderen Stirnseite eine Rotationskurve (35) aufweist.

4. Werkzeugwechsler nach Anspruch 3,
**dadurch gekennzeichnet, dass**
ein an einem mittleren Quersteg einer Zahnstange (37) angeordnetes Treibglied (36) als Mitnehmer in die Rotationskurve (35) eingreift.

5. Werkzeugwechsler nach einem der Ansprüche 2 bis 4,
**dadurch gekennzeichnet, dass**
ein Schwenk- bzw. Schwingarm (37, 57) an seinem einen freien Ende ein Treibglied (59) als Mitnehmer aufweist, das in eine auf der Welle befestigte Kragenbuchse zur axialen Verschiebung di e-ser Welle (42) eingreift, am anderen freien Ende des Schwenk- bzw. Schwingarmes (57) ein Schwenklager (58) vorgesehen ist und ein am mittleren Teil des Schwenk- bzw. Schwingarmes (57) seitlich montiertes Treibglied (56) in die an der Drehscheibe (34) seitlich ausgebildete Hubkurvennut (55) eingreift.

6. Werkzeugwechsler nach einem der vorstehenden Ansprüche,
**dadurch gekennzeichnet, dass**
die Drehscheibe (34) als beidseitige Kurvenscheibe ausgebildet ist und an ihrer einen Stirnseite die Rotationskurve (35) und an ihrer anderen Stirnseite die Hubkurve (55) jeweils als eingefräste Nut aufweist.

7. Werkzeugwechsler nach Anspruch 6,
**dadurch gekennzeichnet, dass**
das Schneckenrad (33') die Kurvenscheibe bildet, die an ihrem Außenumfang die mit der Schnecke (32') in Eingriff befindliche Verzahnung trägt.

8. Werkzeugwechsler nach einem der vorstehend en Ansprüche,
**dadurch gekennzeichnet, dass**
der Antriebsmotor (31, 31') ein Servo-Direktantrieb oder ein polumschaltbarer Drehstrommotor ist.

## Claims

1. A tool changer for machine tools, especially for milling machines, comprising
- a tool double gripper (50, 50') which is attached to the free end of a rotatably mounted shaft (42, 42') that is axially movable in a housing (30, 30') and which has two pliers-shaped tool holders (51, 52),
- a drive motor (31, 31') for the linear and rotary movements of the tool double gripper (50, 50'), said motor being coupled kinematically with the shaft (42, 42'), and
- transmission means for converting the rotation of the motor shaft of the drive motor (31, 31') into the linear and rotary movements of the tool double gripper (50, 50'), wherein
- the transmission means contain a transmission (32, 33; 32', 33') driven by the drive motor (31,31'),
- the transmission drives a curve disk (33', 34) on the front side of which a lifting curve (55, 55') for the linear movement and a rotation curve (35, 35') for the rotary motion are formed,
- a driver (36, 36') of a rack and pinion drive (37, 38; 37', 38') which is rotationally coupled to the shaft (42, 42') engages the rotation curve (35, 35'), wherein the toothed rack (37, 37') thereof cooperates with a longitudinally teethed section (44, 44') of the shaft (42, 42'), and
- a driver (56, 56') of a swiveling linkage (57, 57') coupled translationally to the shaft (42) engages, and is guided in, the lifting curve (55, 55'),
**characterized in that**
- the transmission is a worm gear (32, 33; 32', 33'), the worm wheel (33, 33') of which drives the curve disk (33', 34), and
- a support pipe (40, 40') which surrounds at least partially the shaft (42, 42') is mounted on the end side in the housing (30, 30').

2. The tool changer according to claim 1,
**characterized in that**
the worm wheel (33') of the worm gear rotates the shaft (42') of the tool double gripper (50') via a rack and pinion drive (37', 38', 44') and moves it axially via a lifting curve drive by means of a swiveling linkage (57, 57').

3. The tool changer according to claim 1 or 2,
**characterized in that**
a rotary disk (34) assigned to the worm wheel (33) of the worm drive has a lifting curve (55) in one front side thereof and a rotation curve (35) in the other front side thereof.

4. The tool changer according to claim 3,
**characterized in that**
a drive link (36) arranged at a middle cross web of a toothed rack (37) engages the rotation curve (35) as a driver.

5. The tool changer according to any of claims 2 to 4,
**characterized in that**
a swivel or pivot arm (37, 57) has a drive member (59) as a driver at one free end thereof, said member engaging a collar bush mounted on the shaft for the axial displacement of said shaft (42), and a swivel bearing (58) is provided at the other free end of the swivel or pivot arm (57), and a drive member (56) laterally mounted on the middle part of the swivel or pivot arm (57) engages the lifting curve groove (55) formed laterally on the rotary disk (34).

6. The tool changer according to any of the preceding claims,
**characterized in that**
the rotary disk (34) is made as a two-sided curve disk and has the rotation curve (35) at one front side thereof and the lifting curve (55) the other front side thereof, in each case as a milled-in groove.

7. The tool changer according to claim 6,
**characterized in that**
the worm wheel (33') forms the curve disk which at the outer circumference thereof carries the toothing which meshes with the worm (32').

8. The tool changer according to any of the preceding claims,
**characterized in that**
the drive motor (31, 31') is a servo direct drive or a pole-changing three-phase motor.

## Revendications

1. Changeur d'outils pour machines outils, en particulier pour fraiseuses, comprenant
- une double pince d'outils (50, 50') montée à l'extrémité libre d'un arbre (42, 42') disposé sur palier dans un logement (30, 30') de manière à être coulissable dans le sens axial et rotatif et présentant deux dispositifs de retenue (51, 52) en forme de pince,
- un moteur d'entraînement (31, 31') en accouplement cinématique avec l'arbre (42, 42') pour les déplacements linéaires et rotatifs de la double pince d'outils (50, 50') et
- des moyens d'engrenage pour transformer la rotation de l'arbre moteur du moteur d'entraînement (31, 31') en déplacements linéaires et rotatifs de la double pince d'outils (50, 50'), dans lequel
- les moyens d'engrenage comprennent un engrenage (32, 33 ; 32', 33') entraîné par le moteur d'entraînement (31, 31'),
- l'engrenage entraîne une came (33', 34) sur laquelle est formée une courbe de course de levage (55, 55') pour le mouvement linéaire et une courbe de course de rotation (35, 35') pour le mouvement rotatif,
- un entraîneur (36, 36') d'un train de crémaillère (37, 38 ; 37', 38') qui est en accouplement rotatif avec l'arbre (42, 42') et dont la crémaillère (37, 37') coopère avec une portion (44, 44') dentée longitudinalement de l'arbre (42, 42') rentre dans la courbe de course de rotation (35, 35'), et
- un entraîneur (56, 56') d'une tringlerie de pivotement (57, 57') qui est en accouplement de translation avec l'arbre (42) rentre dans la courbe de course de levage (55, 55') et y est conduit,
**caractérisé en ce que**
- l'engrenage est un engrenage à vis sans fin (32, 33 ; 32', 33') dont la roue (33, 33') entraîne la came (33', 34), et
- un tube support (40, 40') entourant au moins partiellement l'arbre (42, 42') est disposé sur palier du côté extrémité dans le logement (30, 30').

2. Changeur d'outils selon la revendication 1, **caractérisé en ce que** la roue à vis sans fin (33') de l'engrenage à vis sans fin déplace en rotation l'arbre (42') de la double pince d'outils (50') par le biais d'un train de crémaillère (37', 38', 44') et le fait coulisser axialement par le biais d'un train de courbes de course de levage avec une tringlerie de pivotement (57, 57').

3. Changeur d'outils selon la revendication 1 ou 2, **caractérisé en ce qu'**un disque rotatif (34) affecté à la roue à vis sans fin (33) de l'engrenage à vis sans fin présente sur l'une de ses faces frontales une courbe de course de levage (55) et sur son autre face frontale une courbe de course de rotation (35).

4. Changeur d'outils selon la revendication 3, **caractérisé en ce qu'**un élément d'entraînement (36) disposé sur une âme transversale médiane d'une crémaillère (37) rentre dans la courbe de course de rotation (35) sous forme d'entraîneur.

5. Changeur d'outils selon l'une des revendications 2 à 4, **caractérisé en ce qu'**un bras pivotant ou basculant (37, 57) présente, à l'une de ses extrémités libres, un élément d'entraînement (59) sous forme d'entraîneur, lequel rentre dans une douille à collerette fixée sur l'arbre pour le coulissement axial de cet arbre (42), à l'autre extrémité libre du bras pivotant ou basculant (57) est prévu un palier pivotant (58) et un élément d'entraînement (56) monté latéralement sur la partie médiane du bras pivotant ou basculant (57) rentre dans la rainure de courbe de course de levage (55) formée latéralement sur le disque rotatif (34).

6. Changeur d'outils selon l'une des revendications précédentes, **caractérisé en ce que** le disque rotatif (34) est conçu sous forme de came bilatérale et présente, sur l'une de ses faces frontales, la courbe de course de rotation (35) et, sur l'autre face frontale, la courbe de course de levage (55) respectivement sous forme de rainure fraisée.

7. Changeur d'outils selon la revendication 6, **caractérisé en ce que** la roue à vis sans fin (33') forme la came qui porte sur sa périphérie extérieure la denture se trouvant en prise avec la vis sans fin (32').

8. Changeur d'outils selon l'une des revendications précédentes, **caractérisé en ce que** le moteur d'entraînement (31, 31') est un servomoteur direct ou un moteur à courant triphasé et pôles commutables.
